# EUROPÄISCHE PATENTANMELDUNG

(11) **EP 3 287 646 A1**
(43) Veröffentlichungstag der Anmeldung: **28.02.2018**
(21) Anmeldenummer: 17187199.9
(22) Anmeldetag: 22.08.2017
(51) Int. Cl.: F16B 11/00, A47K 10/04

(54) **BEFESTIGUNGSELEMENT MIT NICHT DURCHLÄSSIGEM KLEBERING**

(30) Priorität: 23.08.2016 DE 102016115639
(71) Anmelder: tesa nie wieder bohren GmbH, 63450 Hanau (DE)
(72) Erfinder: BRAUN, Frank, 63584 Gründau (DE)
(74) Vertreter: Patentanwälte Gierlich & Pischitzis Partnerschaft mbB

(57) **Zusammenfassung**

Verfahren zum Anbringen eines Grundkörpers (12) eines Befestigungselements (10) an einer Fläche (18), welches dazu eingerichtet ist, Gegenstände mit der Fläche (18) zu verbinden, wobei das Verfahren die Schritte umfasst: Anordnen des Grundkörpers (12) in Anlage an der Fläche (18), wobei der Grundkörper (12) unter Verwendung eines Kleberings (20) mit der Fläche (18) verbunden wird, so dass die Fläche (18), der Klebering (20) und eine zwischen ihnen vorhandene Fuge luftdichte Barrieren eines zwischen ihnen und dem Grundkörper (12) angeordneten Raums (16) bilden, wobei der Grundkörper (12) wenigstens eine luft- und/oder wasserdurchlässige Verbindung zwischen dem Raum (16) und einer durch den Grundkörper (12) von dem Raum (16) getrennten Außenseite des Grundkörpers (12) aufweist oder der Grundkörper (12) bereits beim Anordnen des Grundkörpers (12) an der Fläche (18) Feuchtigkeit enthält, die der Haftmittelmenge (22) bereitstellbar ist; Einbringen eines Haftmittels in den Raum (16), so dass er mit einer Haftmittelmenge (22) gefüllt wird, die eine Kontaktfläche mit dem Grundkörper (12) aufweist; Starten eines Aushärteprozesses der Haftmittelmenge (22) durch Bereitstellen von Feuchtigkeit für die in dem Raum (16) befindliche Haftmittelmenge (22), wobei vor dem Starten des Aushärteprozesses oder/und während des Aushärteprozesses der Klebering (20) und die Haftmittelmenge (22) derart erwärmt werden, dass ein im Bereich der Kontaktfläche befindlicher Teil der Haftmittelmenge (22) eine über die Kontaktfläche hinweg flächenmäßig homogen ausgehärtete Isolierschicht (22a) ausbildet, die eine weitere luftdichte Barriere für den übrigen Teil der noch nicht ausgehärteten Haftmittelmenge (22b) darstellt. Sie umfasst ferner ein dazu geeignetes Befestigungselement (10).

## Beschreibung

Die Erfindung betrifft ein Verfahren zum Anbringen eines Grundkörpers eines Befestigungselements an einer Fläche, welches dazu eingerichtet ist, Gegenstände mit der Fläche zu verbinden. In einem weiteren Aspekt betrifft die vorliegende Erfindung ein Befestigungselement zur Anbringung von Gegenständen an einer Fläche, welches dazu geeignet ist, gemäß dem erfindungsgemäßen Verfahren an der Fläche angebracht zu werden.

Ein typisches Anwendungsgebiet derartiger Befestigungselemente ist die ortsfeste Anbringung von Gegenständen, wie Handtuchhaltern, Regalen, Leuchten oder dergleichen Ausstattungsartikeln, an einer Wand, Decke, Boden oder dergleichen Fläche, insbesondere in mit Kacheln, Marmorplatten oder mit dergleichen Wandverkleidungen ausgestatteten Räumen. Dabei wird das Befestigungselement bzw. der Grundkörper des Befestigungselements unter Verwendung eines Haftmittels mit der Fläche verbunden. Bei dem Haftmittel handelt es sich üblicherweise um einen Klebstoff, welcher unter Hinzugabe von Feuchtigkeit aushärtet.

Derartige Befestigungselemente sind beispielsweise aus der DE 10 2008 037 095 B3, der DE 44 16 884 A1 oder der WO 03/036106 A1 bekannt.

Es hat sich jedoch gezeigt, dass die aus dem Stand der Technik bekannten Befestigungselemente, je nach den Umgebungsbedingungen in der Nähe des Befestigungselements, erst nach einer Aushärtezeit des Haftmittels von bis zu 12 Stunden voll belastbar sind. Gerade im gewerblichen Bereich findet eine derartig lange Wartezeit jedoch nur geringe Akzeptanz, da Anbringung und Belastung des Befestigungselements nicht innerhalb eines üblicherweise 8 Stunden andauernden Arbeitstages durchgeführt werden können. Insbesondere haben die Erfinder der vorliegenden Erfindung herausgefunden, dass bei einer Belastung des Befestigungselements bzw. des Grundkörpers, welches bzw. welcher mit der Fläche durch noch nicht vollständig ausgehärtetes Haftmittel verbunden ist, Luft in die Nähe des Haftmittels oder sogar in das Haftmittel selbst gezogen wird, beispielsweise über luftdurchlässige Verbindungen, welche sich durch den Grundkörper hindurch erstrecken, oder über Undichtigkeiten zwischen einem Klebering, mit dem der Grundkörper an der Fläche vorpositioniert werden kann, und der Fläche. Hierdurch können sich Blasen in den Kontaktflächen zwischen Haftmittel und Fläche und/oder zwischen Haftmittel und Grundkörper bzw. in dem Haftmittel selbst bilden, sodass aufgrund der Blasenbildung eine Reduktion der Haltekraft des Befestigungselements bzw. des Grundkörpers an der Fläche stattfinden kann.

Es ist daher die Aufgabe der vorliegenden Erfindung, ein Verfahren zum Anbringen eines Grundkörpers eines Befestigungselements an einer Fläche sowie ein Befestigungselement zur Anbringung von Gegenständen an einer Fläche, welches dazu eingerichtet ist, gemäß dem erfindungsgemäßen Verfahren angebracht zu werden, bereitzustellen, mittels welchem auf einfache Art und Weise die volle Belastbarkeit des Befestigungselements früher erreicht werden kann.

Diese Aufgabe wird durch ein Verfahren zum Anbringen eines Grundkörpers eines Befestigungselements an einer Fläche, welches dazu eingerichtet ist, Gegenstände mit der Fläche zu verbinden, gelöst, wobei das Verfahren die Schritte umfasst:
- Anordnen des Grundkörpers in Anlage an der Fläche, wobei der Grundkörper unter Verwendung eines Kleberings mit der Fläche verbunden wird, so dass die Fläche, der Klebering und eine zwischen ihnen vorhandene Fuge luftdichte Barrieren eines zwischen ihnen und dem Grundkörper angeordneten Raums bilden, wobei der Grundkörper wenigstens eine luft- und/oder wasserdurchlässige Verbindung zwischen dem Raum und einer durch den Grundkörper von dem Raum getrennten Außenseite des Grundkörpers aufweist oder der Grundkörper bereits beim Anordnen des Grundkörpers an der Fläche Feuchtigkeit enthält, die der Haftmittelmenge bereitstellbar ist, - Einbringen eines Haftmittels in den Raum, so dass er mit einer Haftmittelmenge gefüllt wird, die eine Kontaktfläche mit dem Grundkörper aufweist, - Starten eines Aushärteprozesses der Haftmittelmenge durch Bereitstellen von Feuchtigkeit für die in dem Raum befindliche Haftmittelmenge, wobei vor dem Starten des Aushärteprozesses oder/und während des Aushärteprozesses der Klebering und die Haftmittelmenge derart erwärmt werden, dass ein im Bereich der Kontaktfläche befindlicher Teil der Haftmittelmenge eine über die Kontaktfläche hinweg flächenmäßig homogen ausgehärtete Isolierschicht ausbildet, die eine weitere luftdichte Barriere für den übrigen Teil der noch nicht ausgehärteten Haftmittelmenge darstellt. Ferner wird diese Aufgabe durch ein Befestigungselement zur Anbringung von Gegenständen an einer Fläche gelöst, umfassend einen Grundkörper und einen Klebering, welche einen Raum für ein Haftmittel definieren, wobei der Grundkörper wenigstens eine luft- und/oder wasserdurchlässige Verbindung zwischen dem Raum und einer durch den Grundkörper von dem Raum getrennten Außenseite des Grundkörpers umfasst, wobei das Befestigungselement dazu geeignet ist, gemäß dem erfindungsgemäßen Verfahren an der Fläche angebracht zu werden. Durch das erfindungsgemäße Verfahren kann erreicht werden, dass der Klebering weicher wird und sich besser an Unebenheiten der Fläche und/oder des Grundkörpers anpassen kann, wodurch auch bei unebenen Flächen gewährleistet werden kann, dass die oben erwähnte Fuge eine luftdichte Barriere darstellt. Andererseits kann durch das erfindungsgemäße Verfahren erreicht werden, dass der an die Unebenheiten der Fläche angepasste Klebering nach seinem Erkalten Bewegungen des Adapters relativ zu der Fläche erschwert.

Entscheidend für die Haltekraft des Befestigungselements ist insbesondere, dass unter Verwendung des erfindungsgemäßen Verfahrens ein noch nicht ausgehärteter Abschnitt der Haftmittelmenge luftdicht eingeschlossen wird, nämlich durch die Fläche, an der das Befestigungselement bzw. der Grundkörper angebracht ist, den Klebering und die voranstehend erwähnte flächenmäßig homogen ausgehärtete Isolierschicht, so dass verhindert werden kann, dass bei Belastung des Grundkörpers Luft in den noch nicht ausgehärteten Abschnitt der Haftmittelmenge gezogen werden kann, wodurch aufgrund der Blasenbildung die Haltekraft herabgesenkt werden kann.

Typischerweise kann die aus ausgehärtetem Haftmittel bestehende Isolierschicht unter Verwendung des erfindungsgemäßen Verfahrens nach einer Aushärtezeit von in etwa einer Stunde eine Stärke von etwa 0,1 bis 0,2 mm aufweisen.

In dem Fall, in dem der Grundkörper bereits beim Anordnen des Grundkörpers an der Fläche Feuchtigkeit enthält, die der Haftmittelmenge bereitstellbar ist, kann das Aufbringen von Feuchtigkeit auf den Grundkörper entfallen oder zusätzlich zu der bereits in dem Grundkörper enthaltenen Feuchtigkeit stattfinden.

In einer Weiterbildung der Erfindung wird vorgeschlagen, dass das Haftmittel aus einem elastischen, feuchtigkeitsaushärtenden Einkomponenten-Kleb- oder Dichtstoff gebildet sein kann.

Vorteilhafterweise kann das Erwärmen für eine Dauer von 1 min bis 5 min, insbesondere von 2 min, durchgeführt werden. Auf diese Weise kann gewährleistet werden, dass der Aushärteprozess zuverlässig und homogen gestartet werden kann, sodass sich die oben beschriebene Isolierschicht entsprechend ausbilden kann.

In diesem Zusammenhang ist es vorteilhaft, dass während des Erwärmens der Klebering und die Haftmittelmenge auf eine Temperatur von 60°C bis 80°C, insbesondere von 70°C bis 80°C, erwärmt werden. Basierend auf diesen Parametern kann eine zuverlässige und insbesondere zerstörungsfreie Anordnung des Grundkörpers an der Fläche erreicht werden.

In einer Weiterbildung der Erfindung kann der Schritt des Bereitstellens von Feuchtigkeit für die Haftmittelmenge ein Aufbringen von Feuchtigkeit auf den Grundkörper umfassen. Dies kann beispielsweise ein Aufsprühen von Wasser bzw. eines Wassernebels auf den Grundkörper sein. Die auf den Grundkörper aufgebrachte Feuchtigkeit kann dabei durch den Grundkörper hindurch zu der Haftmittelmenge transportiert werden, sodass der Aushärteprozess der Haftmittelmenge, welche in dieser Weiterbildung aus einem in Reaktion mit Wasser aushärtenden Haftmittel gebildet ist, gestartet werden kann.

Der Grundkörper kann beispielsweise Durchbrüche oder Kanäle aufweisen, über welche die Feuchtigkeit, beispielsweise aufgrund der kinetischen Energie des Aufsprühens, zu der Haftmittelmenge gelangen kann.

Alternativ oder zusätzlich kann der Grundkörper zumindest teilweise porös ausgebildet sein, sodass auf den Grundkörper aufgebrachte Feuchtigkeit, beispielsweise aufgrund von Kapillarwirkung, zu der Haftmittelmenge gelangen kann.

Es ist dabei vorteilhaft, dass derart Feuchtigkeit auf den Grundkörper aufgebracht wird bzw. der Grundkörper derart ausgebildet ist, dass den den Abschnitten des Grundkörpers, welche in der Lage sind, Luft und/oder Feuchtigkeit passieren zu lassen, benachbarten Abschnitten der Haftmittelmenge gleichmäßig Feuchtigkeit bereitgestellt wird, sodass die oben beschriebene Isolierschicht homogen ausgebildet werden kann. Im Falle eines vollständig porösen Grundkörpers kann dies beispielsweise durch eine über die für ein Aufbringen von Feuchtigkeit zugängliche Fläche des Grundkörpers gleichmäßige Verteilung von Feuchtigkeit erreicht werden.

Vorteilhafterweise kann der Grundkörper ein originär mit Feuchtigkeit gefülltes Feuchtigkeitsreservoir umfassen, welches in an der Fläche angeordnetem Zustand des Grundkörpers mit der Haftmittelmenge in Verbindung steht. Das Feuchtigkeitsreservoir kann dabei derart in dem Grundkörper angeordnet sein, dass es selbst direkt mit der Haftmittelmenge in Kontakt steht oder derart, dass die in dem Feuchtigkeitsreservoir enthaltene Feuchtigkeit über eine entsprechende Verbindungsanordnung mit der Haftmittelmenge in Kontakt tritt.

In einer Weiterbildung der Erfindung kann sich der Klebering, insbesondere in erwärmtem Zustand, an Unebenheiten der Fläche, an der der Grundkörper angeordnet ist, anpassen. An dieser Stelle sei auf die oben beschriebenen Vorteile und Effekte verwiesen, die sich bei einer Erwärmung des Kleberings ergeben können. Zusätzlich kann hierdurch erreicht werden, dass, dadurch dass der Klebering sich auch im nicht-erwärmten Zustand an Unebenheiten der Fläche anpassen kann, kein Haftmittel, während dessen Einbringung in den Raum, zwischen dem Klebering und der Fläche hindurchtreten kann, wodurch zusätzlicher Säuberungsaufwand vermieden werden kann. Der Klebering ist im Allgemeinen als geschlossener Ring zu betrachten, wobei dieser Ring nicht zwangsläufig eine kreisringförmige Gestalt aufweisen muss, sondern beispielsweise auch rechteckig, insbesondere einer Form des Grundkörpers folgend, ausgebildet sein kann.

Nachzutragen sei an dieser Stelle, dass sich verfahrensbedingt, z.B. durch das Befüllen des Raums mit Haftmittel durch den Grundkörper hindurch, auch in den Durchbrüchen oder Kanälen des Grundkörpers Haftmittel befinden kann, welches ebenfalls einen Aushärteprozess durchläuft. Außerhalb des oben erwähnten Raums befindliches Haftmittel trägt jedoch, wenn überhaupt, nur geringfügig zur Erhöhung der Haltkraft des Grundkörpers an der Fläche bei, sodass derart angeordnetes Haftmittel als nicht erfindungswesentlich angesehen werden kann.

Wie einleitend erwähnt, betrifft die vorliegende Erfindung in einem zweiten Aspekt ein Befestigungselement zur Anbringung von Gegenständen an einer Fläche, umfassend einen Grundkörper und einen Klebering, welche einen Raum für ein Haftmittel definieren, wobei der Grundkörper wenigstens eine luft- und wasserdurchlässige Verbindung zwischen dem Raum und einer durch den Grundkörper von dem Raum getrennten Außenseite des Grundkörpers umfasst, wobei das Befestigungselement dazu geeignet ist, gemäß dem erfindungsgemäßen Verfahren an der Fläche angebracht zu werden. In an der Fläche angebrachtem Zustand bilden der Klebering und die Fläche luftdichte Barrieren für das Haftmittel.

Generell sei in Bezug auf die Ausbildung des Befestigungselements bzw. des Grundkörpers auch auf die entsprechenden Textstellen der Beschreibung des erfindungsgemäßen Verfahrens verwiesen.

Dabei ist es vorteilhaft, dass der Klebering Klebestoff umfasst, insbesondere vollständig aus einem Klebstoff gebildet ist. Auf diese Weise kann der Klebering eine selbstklebende Eigenschaft aufweisen, sodass das Befestigungselement an der Fläche vorpositioniert werden kann und anschließend das Haftmittel durch den Grundkörper hindurch, insbesondere über eine Einführöffnung, in den entsprechenden Raum eingebracht werden kann, ohne dass das Befestigungselement bzw. der Grundkörper dabei von einer Person und/oder einer Vorrichtung gehalten werden muss. Vorteilhafterweise kann der Grundkörper wenigstens eine Austrittsöffnung aufweisen, über welche Luft und/oder überschüssiges Haftmittel aus dem Raum entweichen kann.

Vorteilhafterweise kann der Klebstoff aus reinem oder modifiziertem Acrylat gebildet sein.

Die Erfindung wird im Folgenden anhand der beigefügten Zeichnungen an einem Ausführungsbeispiel näher erläutert werden. Es stellt dar:
- Fig. 1: eine schematische Querschnittsansicht eines Grundkörpers des erfindungsgemäßen Befestigungselements;
- Fig. 2: die Querschnittsansicht aus Fig. 1, wobei Haftmittel in den Grundkörper eingebracht worden ist.

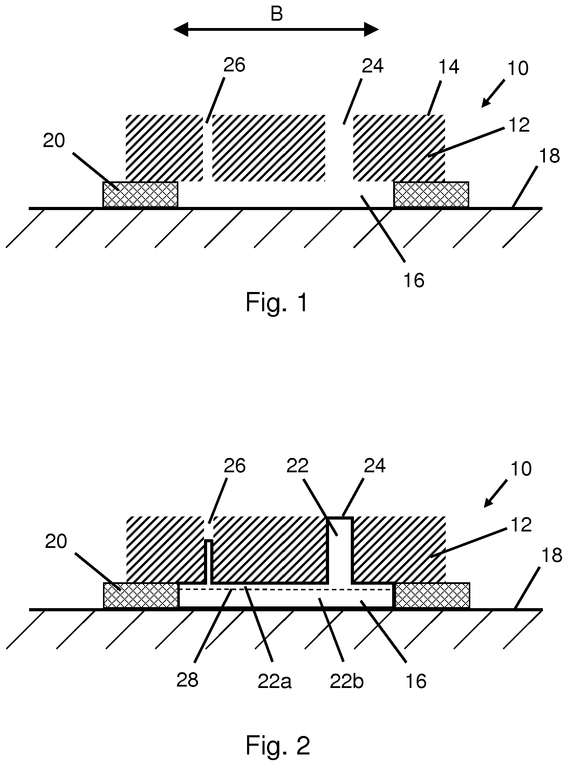

In Fig. 1 ist ein erfindungsgemäßes Befestigungselement allgemein mit 10 bezeichnet. Das Befestigungselement 10 umfasst einen Grundkörper 12, welcher in diesem Ausführungsbeispiel vollständig porös ausgebildet ist.

An dieser Stelle sei angemerkt, dass der Ausdruck "porös" eine Struktur beschreiben soll, welche einen Transport von Feuchtigkeit von beispielsweise einer Oberseite 14 des Grundkörpers 12 durch den Grundkörper 12 hindurch zu einem Raum 16 hin erlaubt. Dies kann beispielsweise durch eine offenporige Struktur des Grundkörpers 12 erreicht werden.

Der Grundkörper 12 ist dabei vorzugsweise aus einem Sintermetall, insbesondere aus einer Bronzeverbindung oder einem geschäumten Mischmaterial hergestellt.

Der Raum 16 ist auf seiner dem Grundkörper 12 entgegengesetzten Seite durch eine Fläche 18 begrenzt, welche den Untergrund darstellt, an den das Befestigungselement 10 anzubringen ist. Bei der Fläche 18 handelt es sich üblicherweise um Fliesen, Kacheln, Steinflächen oder ähnliche Untergründe. In den zu der Fläche 18 im Wesentlichen parallelen Richtungen ist der Raum 16 durch einen Klebering 20 begrenzt. Der Klebering 20 umschließt den Raum 16 in dem hier dargestellten Ausführungsbeispiel vollständig, sodass der Raum 16, mit Ausnahme der durch den Grundkörper 12 begrenzten Seite des Raums 16, luftdicht zu einer Umgebung des Befestigungselements 10 hin abgeschlossen ist.

Wie in Fig. 1 zu erkennen ist, ragt in dieser Ausführungsform der Klebering 20 in einer Breitenrichtung B über die Breitenerstreckung des Grundkörpers 12 hinaus. Dies hat zum Einen den Vorteil, dass eine effektive Klebefläche zwischen dem Klebering 20 und der Fläche 18 bei gleichbleibendem Volumen des Raums 16 größer ist als bei einem Klebering, welcher in der Breitenrichtung B bündig mit dem Grundkörper 12 abschließt. Zum Anderen ergibt sich hieraus der Vorteil, dass hierdurch eine zwischen der Fläche 18 und dem Klebering 20 gebildete Fuge auch bei unebenen Flächen zuverlässig luftdicht geschlossen werden kann.

Zum Einbringen eines Haftmittels in den Raum 16 ist eine durch den Grundkörper 12 hindurchführende Einführöffnung 24 vorgesehen, so dass der Raum 16 mit einer Haftmittelmenge 22 befüllt werden kann.

Ferner ist zum Entweichen von Luft während dem Einführen des Haftmittels in den Raum 16 und zum Entweichen von das Volumen des Raums 16 und der Einführöffnung 24 übersteigender Haftmittelmenge 22 eine Austrittsöffnung 26 vorgesehen, welche ebenfalls durch den Grundkörper 12 hindurchführt, beispielsweise im Wesentlichen parallel zu der Einführöffnung 24.

In bekannter Weise kann der Grundkörper 12 eine Verbindungseinrichtung, wie beispielsweise ein Außengewinde und/oder wenigstens ein Innengewinde, aufweisen, um mit dem Grundkörper 12 z.B. Adapterelemente zur Aufnahme von Gegenständen verbinden zu können.

In Fig. 2 ist das an der Fläche 18 angeordnete Befestigungselement 10 aus Fig. 1 dargestellt, wobei über die Einführöffnung 24 das Haftmittel in den Raum 16 und teilweise in die Austrittsöffnung 26 hinein eingeführt worden ist. Anschließend wurden die übrigen Schritte des erfindungsgemäßen Verfahrens durchgeführt, sodass ein dem Grundkörper 12 zugewandter Abschnitt 22a der Haftmittelmenge 22 bereits ausgehärtet ist, während ein von dem Grundkörper 12 abgewandter Abschnitt 22b der Haftmittelmenge 22 noch nicht ausgehärtet ist. Der Übergang zwischen dem ausgehärteten Abschnitt 22a der Haftmittelmenge 22 und dem noch nicht ausgehärteten Abschnitt 22b der Haftmittelmenge 22 ist in Fig. 2 durch eine gestrichelte Linie 28 dargestellt.

Der noch nicht ausgehärtete Abschnitt 22b der Haftmittelmenge 22 ist somit zu allen Seiten, nämlich durch die Fläche 18, den Klebering 20 und den ausgehärteten Abschnitt 22a der Haftmittelmenge 22, luftdicht von einer Umgebung des Befestigungselements 10 abgeschlossen. Auf diese Weise kann auch bei einer Belastung des Befestigungselements 10 keine Luft zu dem noch nicht ausgehärteten Abschnitt 22b der Haftmittelmenge 22 gelangen, wodurch es zu einer die Haltekraft herabsetzenden Blasenbildung in der Haftmittelmenge 22 kommen könnte.

## Patentansprüche

1. Verfahren zum Anbringen eines Grundkörpers (12) eines Befestigungselements (10) an einer Fläche (18), welches dazu eingerichtet ist, Gegenstände mit der Fläche (18) zu verbinden, wobei das Verfahren die Schritte umfasst:
- Anordnen des Grundkörpers (12) in Anlage an der Fläche (18), wobei der Grundkörper (12) unter Verwendung eines Kleberings (20) mit der Fläche (18) verbunden wird, so dass die Fläche (18), der Klebering (20) und eine zwischen ihnen vorhandene Fuge luftdichte Barrieren eines zwischen ihnen und dem Grundkörper (12) angeordneten Raums (16) bilden, wobei der Grundkörper (12) wenigstens eine luft- und/oder wasserdurchlässige Verbindung zwischen dem Raum (16) und einer durch den Grundkörper (12) von dem Raum (16) getrennten Außenseite des Grundkörpers (12) aufweist oder der Grundkörper (12) bereits beim Anordnen des Grundkörpers (12) an der Fläche (18) Feuchtigkeit enthält, die der Haftmittelmenge (22) bereitstellbar ist,
- Einbringen eines Haftmittels in den Raum (16), so dass er mit einer Haftmittelmenge (22) gefüllt wird, die eine Kontaktfläche mit dem Grundkörper (12) aufweist,
- Starten eines Aushärteprozesses der Haftmittelmenge (22) durch Bereitstellen von Feuchtigkeit für die in dem Raum (16) befindliche Haftmittelmenge (22),
wobei vor dem Starten des Aushärteprozesses oder/und während des Aushärteprozesses der Klebering (20) und die Haftmittelmenge (22) derart erwärmt werden, dass ein im Bereich der Kontaktfläche befindlicher Teil der Haftmittelmenge (22) eine über die Kontaktfläche hinweg flächenmäßig homogen ausgehärtete Isolierschicht (22a) ausbildet, die eine weitere luftdichte Barriere für den übrigen Teil der noch nicht ausgehärteten Haftmittelmenge (22b) darstellt.

2. Verfahren nach Anspruch 1,
**dadurch gekennzeichnet, dass** das Haftmittel aus einem elastischen, feuchtigkeitsaushärtenden Einkomponenten-Kleb- oder Dichtstoff gebildet ist.

3. Verfahren nach einem der vorhergehenden Ansprüche,
**dadurch gekennzeichnet, dass** das Erwärmen für eine Dauer von 1 min bis 5 min, insbesondere von 2 min, durchgeführt wird.

4. Verfahren nach einem der vorhergehenden Ansprüche,
**dadurch gekennzeichnet, dass** während des Erwärmens der Klebering (20) und die Haftmittelmenge (22) auf eine Temperatur von 60°C bis 80°C, insbesondere von 70°C bis 80°C, erwärmt werden.

5. Verfahren nach einem der vorhergehenden Ansprüche,
**dadurch gekennzeichnet, dass** der Schritt des Bereitstellens von Feuchtigkeit für die Haftmittelmenge (22) ein Aufbringen von Feuchtigkeit auf den Grundkörper (12) umfasst.

6. Verfahren nach einem der vorhergehenden Ansprüche,
**dadurch gekennzeichnet, dass** der Grundkörper (12) ein originär mit Feuchtigkeit gefülltes Feuchtigkeitsreservoir umfasst, welches in an der Fläche (18) angeordnetem Zustand des Grundkörpers (12) mit der Haftmittelmenge (22) in Verbindung steht.

7. Verfahren nach einem der vorhergehenden Ansprüche,
**dadurch gekennzeichnet, dass** sich der Klebering (20), insbesondere in erwärmtem Zustand, an Unebenheiten der Fläche (18), an der der Grundkörper (12) angeordnet ist, anpasst.

8. Befestigungselement (10) zur Anbringung von Gegenständen an einer Fläche (18), umfassend einen Grundkörper (12) und einen Klebering (20), welche einen Raum (16) für ein Haftmittel definieren, wobei der Grundkörper (12) wenigstens eine luft- und/oder wasserdurchlässige Verbindung zwischen dem Raum (16) und einer durch den Grundkörper (12) von dem Raum (16) getrennten Außenseite des Grundkörpers (12) umfasst, wobei das Befestigungselement (10) dazu geeignet ist, gemäß einem Verfahren nach einem der Ansprüche 1 bis 7 an der Fläche (18) angebracht zu werden.

9. Befestigungselement nach Anspruch 8,
**dadurch gekennzeichnet, dass** der Klebering (20) Klebstoff umfasst, insbesondere vollständig aus einem Klebstoff gebildet ist.

10. Befestigungselement nach einem der Ansprüche 8 oder 9,
**dadurch gekennzeichnet, dass** der Klebstoff aus reinem oder modifiziertem Acrylat gebildet ist.
